# EUROPÄISCHE PATENTSCHRIFT

(11) **EP 2 983 860 B1**
(45) Veröffentlichungstag und Bekanntmachung des Hinweises auf die Patenterteilung: **19.07.2017**
(21) Anmeldenummer: 14721292.2
(22) Anmeldetag: 24.04.2014
(51) Int. Cl.: B23Q 3/154, H02K 49/10, H01F 7/02

(54) **VORRICHTUNG UND VERFAHREN ZUM BREMSEN EINES ROTIERENDEN ELEMENTES EINER ANORDNUNG SOWIE ANORDNUNG MIT EINER DERARTIGEN VORRICHTUNG**
DEVICE AND METHOD FOR BRAKING A ROTATING ELEMENT OF AN ARRANGEMENT AND ARRANGEMENT WITH SUCH A DEVICE
DISPOSITIF ET PROCEDE POUR FREINER UN ÉLÉMENT ROTATIF D'UN ARRANGEMENT ET ARRANGEMENT AVEC UN TEL DISPOSITIF

(30) Priorität: 29.05.2013 DE 102013210029
(43) Veröffentlichungstag der Anmeldung: 17.02.2016
(73) Patentinhaber: Siemens Aktiengesellschaft, 80333 München (DE)
(72) Erfinder: SCHMITT, Volker, 91052 Erlangen (DE); FUCHS, Andreas, 91056 Erlangen (DE); MAISCHAK, Dieter, 91085 Weisendorf (DE)
(86) Internationale Anmeldenummer: PCT/EP2014/058306
(87) Internationale Veröffentlichungsnummer: WO 2014/191140

(56) Entgegenhaltungen:
- EP-A1- 0 345 554
- EP-B1- 1 193 724
- JP-A- H02 133 100
- US-A- 3 064 149
- US-A1- 2010 308 519

## Beschreibung

Die Erfindung betrifft eine Vorrichtung zum Bremsen eines rotierenden Elementes einer Anordnung, insbesondere zum Bremsen einer rotierenden Welle eines Schienenfahrzeugs, mit einer rotierenden Wirbelstrombremse, die einen drehfest mit dem rotierenden Element verbindbaren Rotor und einen an der Anordnung abstützbaren Stator aufweist, wobei der Stator neben mindestens einem nicht umpolbaren ersten Permanentmagneten mit unveränderlicher Magnetisierung zumindest einen zweiten Magneten aufweist.

Bekannt sind sowohl rein elektromagnetisch erregte Wirbelstrombremsen ("Die Rotierende Wirbelstrombremse (RWB) für den universellen Einsatz in Schienenfahrzeugen, Eisenbahntechnische Rundschau, 54 (2005), H.3. - März) als auch rein permanentmagneterregte rotierende Wirbelstrombremsen (DE 18 00 616 B2). Die rein permanentmagneterregten rotierenden Wirbelstrombremsen können dabei in bekannter Weise durch Verschieben oder Verdrehen zumindest einiger der Permanentmagnete aktiviert bzw. deaktiviert werden. Dabei kann zum Verschieben oder Verdrehen der Permanentmagnete beispielsweise ein elektrischer Antrieb, ein pneumatischer Antrieb, ein hydraulischer Antrieb, ein elektropneumatischer oder ein elektrohydraulischer Antrieb dienen.

Daneben ist aus der Druckschrift CN 101471597 A bekannt eine gattungsgemäße Vorrichtung bekannt, bei der der Stator neben mehreren ersten Permanentmagneten mit unveränderlicher Magnetisierung auch mehrere zweite Magnete in Form von Elektromagneten aufweist, um die Vorteile beider Magnetarten in vorteilhafter Weise zu kombinieren.

Zudem beschreibt die Druckschrift EP1193724 eine Wirbelstrombremse, bei der ein Dauermagnet mit unveränderlicher Magnetisierung und ein ferromagnetisches Element hintereinander in einem nichtmagnetischen Element angeordnet sind. Das nichtmagnetische Element befindet sich im Eisenkern eines Elektromagneten. Der Strom durch die Spule des Elektromagneten steuert dabei den Bremsvorgang.

Der Erfindung liegt die Aufgabe zu Grunde, eine gattungsgemäße Vorrichtung anzugeben, die zu ihrem Betrieb weniger Energie erfordert - mit der also Energieleistung eingespart werden kann.

Gelöst wird diese Aufgabe bei der erfindungsgemäßen Vorrichtung mit den Merkmalen des Patentanspruches 1 dadurch, dass der zumindest eine zweite Magnet ein umpolbarer Permanentmagnet mit veränderlicher Magnetisierung ist, der in Wirkverbindung mit einem Mittel zur Änderung der Magnetisierung steht.

Es wird dabei als vorteilhaft angesehen, wenn das Mittel zur Änderung der Magnetisierung zumindest eine Spule ist, die geeignet ausgebildet und angeordnet ist, in Abhängigkeit ihres Spulenstroms die Magnetisierung des zumindest einen zweiten Permanentmagneten einzustellen, insbesondere umzupolen.

Weiterhin wird es als vorteilhaft angesehen, wenn der zumindest eine zweite Permanentmagnet mit veränderlicher Magnetisierung aus einer Aluminium-Nickel-Kobalt-Legierung (AlNiCo) gebildet ist.

Bevorzugt ist vorgesehen, dass in einer Achsrichtung der zumindest eine zweite Permanentmagnet mit veränderlicher Magnetisierung in Reihe zu dem zumindest einen ersten Permanentmagneten mit unveränderlicher Magnetisierung angeordnet ist oder dass in einer Umlaufrichtung wechselweise erste Permanentmagnete mit unveränderlicher Magnetisierung und zweite Permanentmagnete mit veränderlicher Magnetisierung angeordnet sind.

Mit Vorteil kann der Stator mit mehreren der zweiten Permanentmagnete mit veränderlicher Magnetisierung versehen sein, die in Wirkverbindung mit Mitteln zur Änderung der Magnetisierungen stehen, wobei ihre Magnetisierungen einzeln oder in Gruppen regelbar, insbesondere umpolbar sind.

Um die Bremskraft zu verstärken kann der Stator zusätzlich zumindest einen Elektromagneten aufweisen, der geeignet ausgebildet ist, zum Bremsen ein Magnetfeld zu erzeugen, welches das durch die ersten und zweiten Permanentmagnete erzeugte Magnetfeld überlagert (vestärkt).

Die Erfindung bezieht sich auch auf eine Anordnung mit einem rotierenden Element, die zum Bremsen des rotierenden Elementes eine erfindungsgemäße Vorrichtung aufweist.

Außerdem bezieht sich die Erfindung auch auf ein Verfahren nach Anspruch 8 zum Bremsen eines rotierenden Elementes einer Anordnung, insbesondere zum Bremsen einer rotierenden Welle eines Schienenfahrzeugs, bei dem bei einer rotierenden Wirbelstrombremse, die einen drehfest mit dem rotierenden Element verbindbaren Rotor und einen an der Anordnung abstützbaren Stator aufweist, der Stator neben mindestens einem nicht umpolbaren ersten Permanentmagneten mit unveränderlicher Magnetisierung zumindest mit einem zweiten Magneten versehen wird.

Um bei diesem Verfahren Erregerenergie einzusparen, wird als der zweite Magnet ein umpolbarer Permanentmagnet mit veränderlicher Magnetisierung, der in Wirkverbindung mit einem Mittel zur Änderung der Magnetisierung steht, bereitgestellt.

Vorzugsweise wird dabei als das Mittel zur Änderung der Magnetisierung zumindest eine Spule derart ausgebildet und angeordnet, dass in Abhängigkeit ihres Spulenstroms die Magnetisierung des zumindest einen zweiten Permanentmagneten eingestellt, insbesondere umgepolt wird.

Bevorzugt wird in einer Achsrichtung der zumindest eine zweite Permanentmagnet mit veränderlicher Magnetisierung in Reihe zu dem zumindest einen ersten Permanentmagneten mit unveränderlicher Magnetisierung angeordnet oder es werden in einer Umlaufrichtung wechselweise erste Permanentmagnete mit unveränderlicher Magnetisierung und zweite Permanentmagnete mit veränderlicher Magnetisierung angeordnet.

Der Stator kann mit mehreren der zweiten Permanentmagnete mit veränderlicher Magnetisierung versehen werden, die mit Vorteil in Wirkverbindung mit Mitteln zur Änderung der Magnetisierungen gebracht werden und deren Magnetisierungen einzeln oder in Gruppen geregelt, insbesondere umgepolt werden.

Die Bremskraft zum Bremsen kann dadurch verstärkt werden, dass mittels zumindest eines Elektromagneten des Stators ein Magnetfeld erzeugt wird, welches das durch die ersten und zweiten Permanentmagnete erzeugte Magnetfeld überlagert.

Die Erfindung wird im Weiteren anhand der Figuren 1 bis 4 näher erläutert. Dabei zeigen die
- Figur 1: eine schematische Darstellung eines ersten Ausführungsbeispiels der erfindungsgemäßen Anordnung mit einem rotierenden Element und mit einer ersten Ausführungsform der erfindungsgemäßen Vorrichtung zum Bremsen des rotierenden Elementes, die
- Figur 2: eine Schnittdarstellung des ersten Ausführungsbeispiels der erfindungsgemäßen Anordnung entlang der Linie A-A in Figur 1, die
- Figur 3: eine schematische Darstellung eines zweiten Ausführungsbeispiels der erfindungsgemäßen Anordnung mit einem rotierenden Element und mit einer zweiten Ausführungsform der erfindungsgemäßen Vorrichtung zum Bremsen des rotierenden Elementes, und die
- Figur 4: eine Schnittdarstellung des zweiten Ausführungsbeispiels der erfindungsgemäßen Anordnung entlang der Linie B-B in Figur 3.

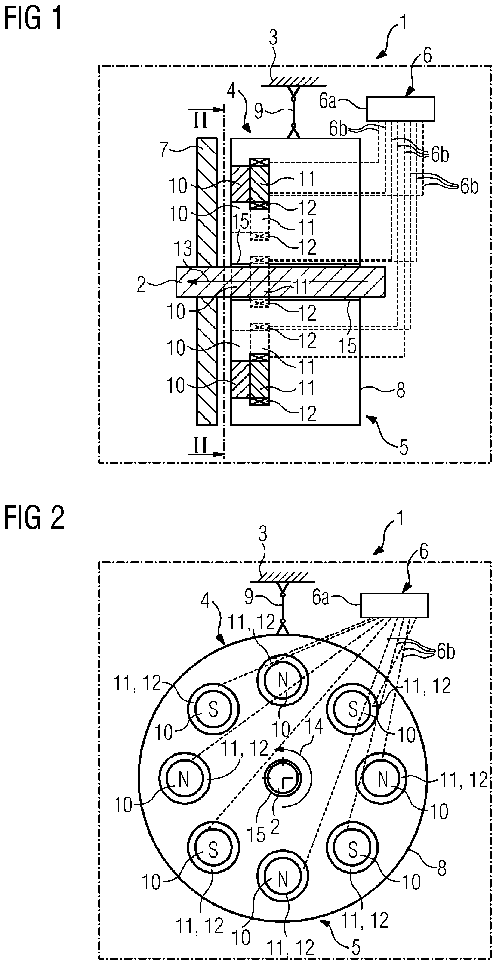

Die Figuren 1 und 2 sowie 3 und 4 zeigen zwei Ausführungsbeispiele 1; 101 der erfindungsgemäßen Anordnung, bei denen es sich hier um Schienenfahrzeuge handelt. Jedes der Schienenfahrzeuge ist jeweils mit mindestens einem rotierenden Element 2; 102 in Form einer Welle versehen, die die Radachse bildet, an der in hier nicht gezeigter Weise jeweils zwei Räder befestigt sind und die über hier nicht gezeigte Radlager drehbar an einem Drehgestell 3; 103 des jeweiligen Schienenfahrzeugs gehalten ist. Dabei weisen die beiden erfindungsgemäßen Anordnungen (Schienenfahrzeuge) zum Bremsen des rotierenden Elementes (der Radachse) jeweils eine hier als Ganzes mit 4; 104 bezeichnete erfindungsgemäße Vorrichtung auf.

Die Vorrichtungen 4; 104 umfassen jeweils neben einer rotierenden Wirbelstrombremse 5; 105 auch Mittel 6; 106 zur Regelung der rotierenden Wirbelstrombremse 5; 105.

Die in den Figuren 1 und 2 sowie 3 und 4 gezeigten rotierenden Wirbelstrombremsen 5; 105 weisen jeweils einen drehfest mit dem rotierenden Element 2; 102 verbundenen Rotor 7; 107 und einen Stator 8; 108 auf, wobei der Stator 8; 108 über eine Drehmomentstütze 9; 109 am Drehgestell 3; 103 abgestützt ist.

Die rotierenden Wirbelstrombremsen können jedoch anstelle nur eines Rotors auch mehrere Rotoren und/oder anstelle nur eines Stators auch mehrere Statoren aufweisen.

Zur Einsparung von Erregerleistung und der damit verbundenen Ausstattung des Schienenfahrzeugs weisen die Statoren 8; 108 neben ersten Permanentmagneten 10; 110 mit unveränderlicher Magnetisierung (nicht umpolbare erste Permanentmagnete) zweite Permanentmagnete 11; 111 mit veränderlicher Magnetisierung (umpolbare zweite Permanentmagnete) auf, wobei jeder der zweiten Permanentmagnete 11; 111 jeweils in Wirkverbindung mit einem ihm zugeordneten Mittel 12; 112 zur Änderung der Magnetisierung in Form einer Spule steht.

Dabei umfasst jede der Spulen 12; 112 den zweiten Permanentmagneten 11; 111, dem sie zugeordnet ist. Die Spulen 12; 112 sind dadurch geeignet ausgebildet und angeordnet, in Abhängigkeit ihres Spulenstroms die Magnetisierung des jeweils zugeordneten zweiten Permanentmagneten 11; 111 einzustellen, insbesondere umzupolen.

Die zweiten Permanentmagnete 11; 111 mit veränderlicher Magnetisierung sind aus einer Aluminium-Nickel-Kobalt-Legierung AlNiCo gebildet.

Die Mittel 6; 106 zur Regelung der rotierenden Wirbelstrombremse 5; 105 umfassen eine Steuergerät 6a; 106a sowie Steuerleitungen 6b; 106b. Sie regeln den Spulenstrom der Spulen einzeln oder in Gruppen, so dass die Magnetisierungen der zweiten Permanentmagnete 11; 111 mit veränderlicher Magnetisierung einzeln oder in Gruppen regelbar, insbesondere umpolbar sind. Somit lässt sich in vorteilhafter Weise durch Umpolen einzelner der zweiten Permanentmagnete 11; 111 oder von einzelnen Gruppen der zweiten Permanentmagnete 11; 111 die Bremskraft stufig dosieren.

Zur Verringerung des Bremskraftverlustes im Verlaufe einer Bremsung (Fading) sind der Rotor 7; 107 und der Stator 8; 108 in einer Achsrichtung 13; 113 versetzt angeordnet. Dabei sind zwischen dem rotierenden Element 2; 102 und dem Stator Lager 15; 115 angeordnet.

Bei der in den Figuren 1 und 2 gezeigten ersten Ausführungsform 4 der erfindungsgemäßen Vorrichtung ist jeder der zweiten Permanentmagnete 11 mit veränderlicher Magnetisierung in der Achsrichtung 13 in Reihe zu jeweils einem der ersten Permanentmagnete 10 mit unveränderlicher Magnetisierung angeordnet, so dass sie ein Paar bilden. Insgesamt ist der Rotor hier beispielshaft mit acht derartigen Paaren 10, 11 versehen, die in einer Umlaufrichtung 14 gleichmäßig verteilt angeordnet sind.

Hier werden bei gleicher Polarität der ersten und der zweiten Permanentmagnete 11, 12 die Magnetfelder der ersten Permanentmagnete durch die Magnetfelder der zweiten Permanentmagnete verstärkt.

Sind alle zweiten Permanentmagnete 11 derart umgepolt, dass ihre Polarität der Polarität der ersten Permanentmagnete 10 entgegengesetzt ist, so werden die Magnetfelder der ersten Permanentmagnete durch die Magnetfelder der zweiten Permanentmagnete abgeschwächt oder aufgehoben.

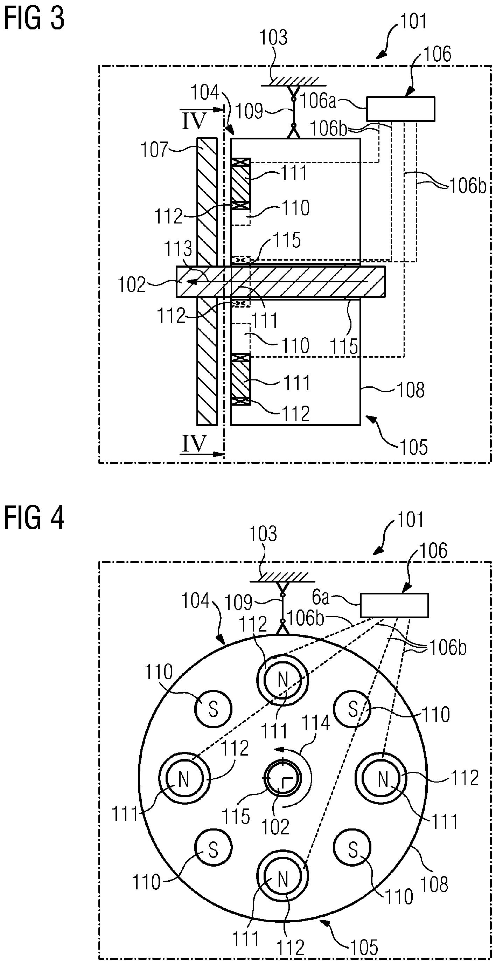

Bei der in den Figuren 3 und 4 gezeigten zweiten Ausführungsform 104 der erfindungsgemäßen Vorrichtung sind die ersten Permanentmagnete 110 mit unveränderlicher Magnetisierung und die zweiten Permanentmagnete 111 mit veränderlicher Magnetisierung in der Umlaufrichtung 114 wechselweise angeordnet, wobei die Polachsen der Permanentmagnete 110, 111 parallel zur Achsrichtung 113 verlaufen.

Hier werden bei gleicher Polarität der ersten und der zweiten Permanentmagnete 110, 111 keine Wirbelstromkräfte in dem Rotor 107 indiziert, so dass keine Bremskraft entsteht. Sind alle zweiten Permanentmagnete 111 derart umgepolt, dass ihre Polarität der Polarität der ersten Permanentmagnete 110 entgegengesetzt ist (vgl. Figur 4), so werden in dem Rotor 107 maximale Wirbelströme induziert, so dass maximale Bremskraft entsteht.

Um die Bremskraft zu verstärken könnte der Stator bei den beiden Ausführungsformen der erfindungsgemäßen Vorrichtung in hier nicht gezeigter Weise zusätzlich zumindest einen Elektromagneten aufweisen, der geeignet ausgebildet ist, zum Bremsen ein Magnetfeld zu erzeugen, das das durch die ersten und zweiten Permanentmagnete erzeugte Magnetfeld überlagert (verstärkt).

## Patentansprüche

1. Vorrichtung (4; 104) zum Bremsen eines rotierenden Elementes (2; 102) einer Anordnung (1; 101), insbesondere zum Bremsen einer rotierenden Welle,
mit einer rotierenden Wirbelstrombremse (5; 105), die einen drehfest mit dem rotierenden Element (2; 102) verbindbaren Rotor (7; 107) und einen an der Anordnung (4; 104) abstützbaren Stator (8; 108) aufweist, wobei der Stator (8; 108) neben mindestens einem nicht umpolbaren ersten Permanentmagneten (10; 110) mit unveränderlicher Magnetisierung zumindest einen zweiten Magneten aufweist,
**dadurch gekennzeichnet, dass** der zumindest eine zweite Magnet ein umpolbarer Permanentmagnet (11; 111) mit veränderlicher Magnetisierung ist, der in Wirkverbindung mit einem Mittel (12; 112) zur Änderung der Magnetisierung steht.

2. Vorrichtung (4; 104) nach Anspruch 1,
**dadurch gekennzeichnet, dass** das Mittel (12; 112) zur Änderung der Magnetisierung zumindest eine Spule ist, die geeignet ausgebildet und angeordnet ist, in Abhängigkeit ihres Spulenstroms die Magnetisierung des zumindest einen zweiten Permanentmagneten (11; 111) einzustellen, insbesondere umzupolen.

3. Vorrichtung (4; 104) nach Anspruch einem der Ansprüche 1 oder 2,
**dadurch gekennzeichnet, dass** der zumindest eine zweite Permanentmagnet (11; 111) mit veränderlicher Magnetisierung aus einer Aluminium-Nickel-Kobalt-Legierung (AlNiCo) gebildet ist.

4. Vorrichtung (4; 104) nach einem der Ansprüche 1 bis 3,
**dadurch gekennzeichnet,**
- **dass** in einer Achsrichtung (13) der zumindest eine zweite Permanentmagnet (11) mit veränderlicher Magnetisierung in Reihe zu dem zumindest einen ersten Permanentmagneten (10) mit unveränderlicher Magnetisierung angeordnet ist oder
- **dass** in einer Umlaufrichtung (114) wechselweise erste Permanentmagnete (110) mit unveränderlicher Magnetisierung und zweite Permanentmagnete (111) mit veränderlicher Magnetisierung angeordnet sind.

5. Vorrichtung (4; 104) nach einem der Ansprüche 1 bis 4,
**dadurch gekennzeichnet, dass** der Stator (8; 108) mit mehreren der zweiten Permanentmagnete (11; 111) mit veränderlicher Magnetisierung versehen ist, die in Wirkverbindung mit Mitteln (12; 112) zur Änderung der Magnetisierungen stehen, wobei ihre Magnetisierungen einzeln oder in Gruppen regelbar, insbesondere umpolbar sind.

6. Vorrichtung (4; 104) nach einem der Ansprüche 1 bis 5,
**dadurch gekennzeichnet, dass** der Stator zusätzlich zumindest einen Elektromagneten aufweist, der geeignet ausgebildet ist, zum Bremsen ein Magnetfeld zu erzeugen, welches das durch die ersten und zweiten Permanentmagnete erzeugte Magnetfeld überlagert.

7. Anordnung (1; 101), insbesondere Schienenfahrzeug, mit einem rotierenden Element (2; 102), insbesondere einer rotierenden Welle, und mit einer Vorrichtung (4; 104) zum Bremsen des rotierenden Elementes,
**dadurch gekennzeichnet, dass** die Vorrichtung (4; 104) nach einem der Ansprüche 1 bis 6 ausgebildet ist.

8. Verfahren zum Bremsen eines rotierenden Elementes (2; 102) einer Anordnung (1; 101), insbesondere zum Bremsen einer rotierenden Welle,
bei dem bei einer rotierenden Wirbelstrombremse (5; 105), die einen drehfest mit dem rotierenden Element (2; 102) verbindbaren Rotor (7; 107) und einen an der Anordnung (1; 101) abstützbaren Stator (8; 108) aufweist, der Stator (8; 108) neben mindestens einem nicht umpolbaren ersten Permanentmagneten (10; 110) mit unveränderlicher Magnetisierung zumindest mit einem zweiten Magneten versehen wird, **dadurch gekennzeichnet, dass** als der zweite Magnet ein umpolbarer Permanentmagnet (11; 111) mit veränderlicher Magnetisierung, der in Wirkverbindung mit einem Mittel (12; 112) zur Änderung der Magnetisierung steht, bereitgestellt wird.

9. Verfahren nach Anspruch 8,
**dadurch gekennzeichnet, dass** als das Mittel (12; 112) zur Änderung der Magnetisierung zumindest eine Spule derart ausgebildet und angeordnet wird, dass in Abhängigkeit ihres Spulenstroms die Magnetisierung des zumindest einen zweiten Permanentmagneten (11; 111) eingestellt, insbesondere umgepolt wird.

10. Verfahren nach einem der Ansprüche 8 oder 9,
**dadurch gekennzeichnet,**
- **dass** in einer Achsrichtung (13) der zumindest eine zweite Permanentmagnet (11) mit veränderlicher Magnetisierung in Reihe zu dem zumindest einen ersten Permanentmagneten (10) mit unveränderlicher Magnetisierung angeordnet wird oder
- **dass** in einer Umlaufrichtung (114) wechselweise erste Permanentmagnete (110) mit unveränderlicher Magnetisierung und zweite Permanentmagnete (111) mit veränderlicher Magnetisierung angeordnet werden.

11. Verfahren nach einem der Ansprüche 8 bis 10,
**dadurch gekennzeichnet, dass** der Stator (8; 108) mit mehreren der zweiten Permanentmagnete (11; 111) mit veränderlicher Magnetisierung versehen wird, die in Wirkverbindung mit Mitteln (12; 112) zur Änderung der Magnetisierungen gebracht werden und deren Magnetisierungen einzeln oder in Gruppen geregelt, insbesondere umgepolt werden.

12. Verfahren nach einem der Ansprüche 8 bis 11,
**dadurch gekennzeichnet, dass** zum Bremsen mittels zumindest eines Elektromagneten des Stators ein Magnetfeld erzeugt wird, welches das durch die ersten und zweiten Permanentmagnete erzeugte Magnetfeld überlagert.

## Claims

1. Device (4; 104) for braking a rotating element (2; 102) of an arrangement (1; 101), in particular for braking a rotating shaft,
having a rotating eddy current brake (5; 105), which has a rotor (7; 107) which can be connected in a rotatably fixed manner with the rotating element (2; 102) and a stator (8; 108) which can be braced against the arrangement (4; 104), wherein aside from at least one first permanent magnet (10; 110) with non-variable magnetisation, the polarity of which cannot be reversed, the stator (8; 108) has at least one second magnet,
**characterised in that**
the at least one second magnet is a permanent magnet (11; 111) with a variable magnetisation, the polarity of which cannot be reversed, which interacts with a means (12; 112) for varying the magnetisation.

2. Device (4; 104) according to claim 1,
**characterised in that**
the means (12; 112) for varying the magnetisation is at least one coil, which is suitably embodied and arranged to adjust the magnetisation of the at least one second permanent magnet (11; 111), in particular to reverse the polarity thereof, as a function of its coil current.

3. Device (4; 104) according to one of claims 1 or 2,
**characterised in that**
the at least one second permanent magnet (11; 111) is formed with variable magnetization from an aluminium-nickel-cobalt alloy (AlNiCo).

4. Device (4; 104) according to one of claims 1 to 3,
**characterised in that**
- in an axial direction (13) the at least one second permanent magnet (11) with variable magnetisation is arranged in series with the at least one first permanent magnet (10) with non-variable magnetisation or
- in a peripheral direction (114), first permanent magnets (110) with non-variable magnetisation and second permanent magnets (111) with variable magnetisation are arranged alternately.

5. Device (4; 104) according to one of claims 1 to 4,
**characterised in that**
the stator (8; 108) is provided with a number of second permanent magnets (11; 111) with variable magnetisation, which interact with means (12; 112) for varying the magnetisations, wherein their magnetisations can be regulated individually or in groups, in particular their polarity can be reversed.

6. Device (4; 104) according to one of claims 1 to 5,
**characterised in that**
the stator additionally comprises at least one electromagnet, which is suitably embodied, for braking purposes, to generate a magnetic field which overlies the magnetic field generated by the first and second permanent magnets.

7. Arrangement (1; 101), in particular rail vehicle, having a rotating element (2; 102), in particular a rotating shaft, and having a device (4; 104) for braking the rotating element, **characterised in that** the device (4; 104) is embodied according to one of claims 1 to 6.

8. Method for braking a rotating element (2; 102) of an arrangement (1; 101), in particular for braking a rotating shaft,
in which with a rotating eddy current brake (5; 105), which has a rotor (7; 107) which can be connected in a rotatably fixed manner with the rotating element (2; 102) and has a stator (8; 108) which can be braced against the arrangement (1; 101), aside from the at least one first permanent magnet (10, 110) with non-variable magnetisation, the polarity of which cannot be reversed, the stator (8; 108) is provided at least with a second magnet,
**characterised in that**
a permanent magnet (11; 111) with variable magnetisation, the polarity of which cannot be reversed, which interacts with a means (12; 112) for varying the magnetisation, is provided as a second magnet.

9. Method according to claim 8,
**characterised in that** at least one coil is embodied and arranged as the means (12; 112) for varying the magnetisation such that as a function of its coil current the magnetisation of the at least one second permanent magnet (11; 111) is adjusted, in particular its polarity is reversed.

10. Method according to one of claims 8 or 9,
**characterised in that**
- in an axial direction (13) the at least one second permanent magnet (11) with variable magnetisation is arranged in series with the at least one first permanent magnet (10) with non-variable magnetisation or
- in a peripheral direction (114), first permanent magnets (110) with non-variable magnetisation and second permanent magnets (111) with variable magnetisation are arranged alternately.

11. Method according to one of claims 8 to 10,
**characterised in that**
the stator (8; 108) is provided with a number of second permanent magnets (11; 111) with variable magnetisation, which are made to interact with means (12; 112) for varying the magnetisations and the magnetisations of which are regulated individually or in groups, in particular their polarities are reversed.

12. Method according to one of claims 8 to 11,
**characterised in that** a magnetic field, which overlies the magnetic field generated by the first and second permanent magnets, is generated for the purpose of braking by means of at least one electromagnet of the stator.

## Revendications

1. Dispositif ( 4 ; 104 ) de freinage d'un élément ( 2 ; 102 ) tournant d'un agencement ( 1 ; 101 ), notamment de freinage d'un arbre tournant,
comprenant un frein ( 5 ; 105 ) tournant à courants de Foucault, qui a un rotor ( 7 ; 107 ) pouvant être rendu solidaire en rotation de l'élément ( 2 ; 102 ) tournant et un stator ( 8 ; 108 ) pouvant s'appuyer sur l'agencement ( 4 ; 104 ), le stator ( 8 ; 108 ) ayant , outre au moins un premier aimant ( 10 ; 110 ) permanent à polarité non inversable et d'aimantation non modifiable, au moins un deuxième aimant,
**caractérisé en ce que**
le au moins un deuxième aimant est un aimant ( 11 ; 111 ) permanent à polarité modifiable et d'aimantation modifiable, qui est en liaison d'action avec un moyen ( 12 ; 112 ) de modification de l'aimantation.

2. Dispositif ( 4 ; 104 ) suivant la revendication 1,
**caractérisé en ce que**
le moyen ( 12 ; 112 ) de modification de l'aimantation est au moins une bobine constituée et disposée de manière appropriée pour régler, en fonction de son courant de bobine, l'aimantation du au moins un deuxième aimant ( 11 ; 111 ) permanent, notamment en changer la polarité.

3. Dispositif ( 4 ; 104 ) suivant l'une des revendications 1 ou 2,
**caractérisé en ce que**
le au moins un deuxième aimant ( 11 ; 111 ) permanent, dont l'aimantation peut être modifiée, est en un alliage d'aluminium, de nickel et de cobalt ( AlNiCo ).

4. Dispositif ( 4 ; 104 ) suivant l'une des revendications 1 à 3,
**caractérisé**
- **en ce que**, dans une direction ( 13 ) axiale le au moins un deuxième aimant ( 11 ) permanent, dont l'aimantation peut être modifiée, est monté en série avec le au moins un premier aimant ( 10 ) permanent, dont l'aimantation ne peut pas être modifiée ou
- **en ce que**, dans une direction ( 114 ) périphérique, il est monté en alternance des premiers aimants ( 110 ) permanents, dont l'aimantation ne peut pas être modifiée, et des deuxièmes aimants ( 111 ) permanents, dont l'aimantation peut être modifiée.

5. Dispositif ( 4 ; 104 ) suivant l'une des revendications 1 à 4,
**caractérisé en ce que**
le stator ( 8 ; 108 ) est pourvu de plusieurs des deuxièmes aimants ( 11 ; 111 ) permanents, dont l'aimantation peut être modifiée, qui sont en liaison d'action avec des moyens ( 12 ; 112 ) de modification des aimantations, leur aimantation étant réglable, individuellement ou en groupe, en pouvant notamment changer de polarité.

6. Dispositif ( 4 ; 104 ) suivant l'une des revendications 1 à 5,
**caractérisé en ce que**
le stator a, en outre, au moins un électroaimant constitué de manière propre à produire, pour le freinage, un champ magnétique, qui se superpose au champ magnétique produit par les premiers et deuxièmes aimants permanents.

7. Agencement ( 1 ; 101 ), notamment véhicule ferroviaire, comprenant un aimant ( 2 ; 102 ) tournant, notamment un arbre tournant, et un dispositif ( 4 ; 104 ) de freinage de l'élément tournant,
**caractérisé en ce que**
le dispositif ( 4 ; 104 ) est constitué suivant l'une des revendications 1 à 6.

8. Procédé de freinage d'un élément ( 2 ; 102 ) tournant, d'un agencement ( 1 ; 101 ), notamment pour freiner un arbre tournant,
dans lequel, pour un frein ( 5 ; 105 ) tournant à courants de Foucault, qui a un rotor ( 7 ; 107 ) pouvant être rendu solidaire de l'élément ( 2 ; 102 ) tournant et un stator ( 8 ; 108 ) pouvant s'appuyer sur l'agencement ( 1 ; 101 ), on munit le stator ( 8 ; 108 ), outre d'au moins un premier aimant ( 10 ; 110 ) permanent, dont on ne peut pas changer la polarité et d'aimantation non modifiable, d'au moins un deuxième aimant,
**caractérisé en ce que**
l'on met à disposition comme deuxième aimant un aimant ( 11 ; 111 ) permanent, dont la polarité peut être modifiée et dont l'aimantation peut être modifiée, qui est en liaison d'action avec un moyen ( 12 ; 112 ) de modification de l'aimantation.

9. Procédé suivant la revendication 8,
**caractérisé en ce que**,
comme moyen ( 12 ; 112 ) de modification de l'aimantation, on constitue et dispose au moins une bobine, de manière à régler, en fonction de son courant de bobine, l'aimantation du au moins un deuxième aimant ( 11 ; 111 ) permanent, notamment en en inversant la polarité.

10. Procédé suivant l'une des revendications 8 ou 9, **caractérisé**
- **en ce que** l'on monte, dans une direction ( 13 ) axiale, le au moins un deuxième aimant ( 11 ) permanent, dont l'aimantation peut être modifiée, en série avec le au moins un premier aimant ( 10 ) permanent, dont l'aimantation ne peut pas être modifiée ou
- **en ce que**, dans une direction ( 114 ) périphérique, on monte en alternance des premiers aimants ( 110 ) permanents, dont l'aimantation ne peut pas être modifiée, et des deuxièmes aimants ( 111 ) permanents, dont l'aimantation peut être modifiée.

11. Procédé suivant l'une des revendications 8 à 10,
**caractérisé en ce que**
on munit le stator ( 8 ; 108 ) de plusieurs des deuxièmes aimants ( 11 ; 111 ) permanents, dont l'aimantation peut être modifiée et qui sont mis en liaison d'action avec des moyens ( 12 ; 112 ) de modification des aimantations et on régule leur aimantation, individuellement ou en groupe, notamment en en inversant les polarités.

12. Procédé suivant l'une des revendications 8 à 11,
**caractérisé en ce qu'**
on produit pour le freinage, au moyen d'au moins un électroaimant du stator, un champ magnétique, qui se superpose au champ magnétique produit par les premiers et deuxièmes aimants permanents.
